# EUROPEAN PATENT APPLICATION

(11) **EP 1 447 070 A1**
(43) Date of publication of application: **18.08.2004**
(21) Application number: 03425079.5
(22) Date of filing: 11.02.2003
(51) Int. Cl.: A61H 1/00, A61H 23/04, B60N 2/56

(54) **Seat with massaging apparatus and process for performing a massage**

(71) Applicant: Johnson Controls Seating Cap S.r.l., 10095 Grugliasco (TO) (IT)
(72) Inventor: De Miguel Posada, Juan Fernando, Via Scoffone, 3/5 10095 Grugllasco (TO) (IT)
(74) Representative: Gislon, Gabriele

(57) **Abstract**

A seat, in particular for vehicles, comprises a massage device featuring a number of flexible and deformable containers (7, 8) forming bags (24a-c, 19a-c, 37a-c, 38a-d) connected to a control unit and to a pump (9); the bags are temporarily deformed by introducing and removing pressurised air into and from the bags one after the other to stimulate in succession different areas of the seat user's body.

## Description

The present invention concerns a seat provided with a massaging device and a massage procedure with said device.

The invention also concerns a massaging device to be used in a seat, in particular in a seat for motor vehicles, aeroplanes, trains and transportation means in general.

It is known that when a person remains seated for a long time without the possibility of moving, circulation problems can occur which can be serious; in addition the person experiences a sense of fatigue and discomfort. To solve this problem, seats provided with so-called "massaging" devices have been developed, in particular for motor vehicles, in order to improve the circulation of the person seated.

US 2002/0032395 (Klingler) describes a massaging device for seats, provided both in the seat and in the backrest of a seat. Said device consists essentially of a set of rollers fitted on a bendable support located beneath the padding which are moved forward and back to provide the desired massaging effect.

US 2002/0003366 (Fourrey et al.) describes a seat with massaging device in which the seat is longitudinally divided into two parts and comprises a padding suspension mesh in addition to mechanical means that give the seat a cyclic movement via said mesh.

US 2002/0107458 (Flick) describes a seat provided with a massaging device comprising a number of remote-controlled vibration transducers.

All these devices have been proved to present various problems. One problem common to all of them is the fact that the known devices take up a lot of room and their application in a seat involves an increase in overall dimensions of the same which is not desirable, in particular as regards the backrest.

Another problem is the need to house in the same seat, together with the massaging device, various other types of accessories and in particular ventilation devices, passenger presence sensors, heating devices and devices for adapting the shape of the seat to the passenger such as, for example, lumbar support devices.

A further problem of the known devices is their noisiness, in particular with the use of means fitted on slides.

It is therefore necessary to produce a seat provided with a massaging device that is effective, economic, easy to fit on a standard seat and has compact overall dimensions. Said device must ensure effective improvement of the circulation without distracting the driver, when installed in the driver's seat.

The aim of the present invention is to solve the above-mentioned problems by means of a seat provided with massaging device that is effective and features compact overall dimensions, able to be used together with heating and ventilation devices and with the accessories generally present in the seat.

A further aim of the invention is to provide a method for operation of said seat.

Another aim of the invention is to produce a massaging device for seats, in particular seats of vehicles, that is economic, effective and easy to install, and that has compact overall dimensions.

Said aims are achieved by the present invention, which concerns a seat comprising a massaging device featuring a number of inflatable containers, a source of pressurised fluid, means for connecting said containers to said source of pressurised fluid, means for supplying and removing separately and in succession said fluid from said containers to inflate and deflate said containers in a sequence which is preferably pre-set and repeatable.

In the preferential embodiment the device is a pneumatic device and the fluid used is air.

According to an embodiment of the invention, the seat is a seat for motor vehicles and comprises a complete device for each seat, i.e. the seat is provided with all the above-mentioned characteristics, including a pump for the air and a unit for controlling the functions of the device. Preferably the device will be powered at 12 Volts and comprises a voltage limiter positioned upstream of the pump or control unit.

According to another aspect of the invention the containers consist of pockets or bags made of plastic sheets sealed together to form said bags. Each bag is provided with its own air inlet and outlet. Preferably the bags are arranged between the padding and the covering.

According to another aspect of the invention, the seat is also provided with means for conditioning comprising a number of channels or through holes made in the padding, a number of fans arranged at the level of said through holes and a number of air circulation channels connected to each of the through holes and arranged on the opposite side to the fan.

The invention also concerns a massaging device for seats according to claim 10.

A further subject of the invention is a massage procedure by means of a massaging device comprising a number of inflatable containers according to claims 10 or 11 in a seat according to one of the claims from 1 to 9, characterised according to claim 12.

The procedure therefore provides for the volume occupied by the bags to be temporarily increased, i.e. the bags or containers are inflated, bringing them from an initial condition of basically nil volume, as the bags are flat, to a condition in which the bags are inflated and vice versa. For said purpose pressurised air is introduced into and removed from the bags one after the other: in this way different areas of the user's body are stimulated in succession and a massaging effect is obtained.

Preferably the first container is restored to its initial volume by simply removing the supply of pressurised air: the weight of the user will deflate the container or bag which will become flat again. Generally the inflation and deflation phases are repeated for the number of containers so that there is not more than one bag, or a pair of corresponding bags, inflated at the same time for one single user.

Even more preferably, the inflation sequence direction runs from the front portion of the seat to the upper portion of the backrest and vice versa, descending from the upper portion of the backrest to the front portion of the seat.

The invention has many advantages with respect to the known technique.

In fact, the adoption of a pneumatic bag massaging device permits very compact dimensions of the device which, when deflated, is substantially flat. It is therefore possible to insert it in the seat without substantially increasing its dimensions since the bags are flat when at rest. The arrangement of the bags and their operation in succession provides an optimal massage effect.

The use of pneumatic bags also permits great flexibility in their positioning so that it is possible not only to have a massage device both in the seat and in the backrest but it is also possible to have a seat ventilation device together with a massage device. A further advantage deriving from the adoption of a pneumatic inflatable bag system is that the device can be provided with one or more bags dedicated to the adaptive function, i.e. bags that remain inflated for as long as the seat is occupied and which adapt their shape to that of the seat user.

The adoption of a fan for the backrest and two fans for the seat in combination with ventilation channels with section decreasing from the ventilation hole provides optimal conditioning of the seat.

A further advantage is the silence of the system, obtained thanks to the fact that the only mechanical part of the massaging device is the air pump and that there is a voltage limiter between the electrical system of the vehicle and pump in order not to exceed the 12 Volts at the air pump inlet. Alternatively the voltage limiter is fitted upstream of the control unit and the pump is powered by the control unit. The following description refers to a seat for motor vehicles but this does not limit the protection of the present invention to said use; in fact the advantages of greatly reduced weight and extremely compact overall dimensions mean that the device can be used in other vehicles, for example in aeroplanes, and also in seats not fitted in vehicles, such as theatre and cinema seats for example.

The invention will now be described in greater detail with reference to the drawings enclosed as a non-restrictive example, where:
- fig. 1 is a schematic exploded view of the seat of the invention;
- fig. 2 is an enlarged view of the bags for the backrest of the front seat;
- fig. 3 is an enlarged view of the bags for the seat of the front seat;
- fig. 4 and 5 are plan views of the bags of the backrest and seat of the rear seat;
- fig. 6 is a schematic plan view of the padded portion of the seat part of the seat according to the invention;
- fig. 7 is a schematic view in longitudinal section of the seat part of the seat according to the invention; and
- fig. 8 is a diagram of the voltage limiter device according to the invention.

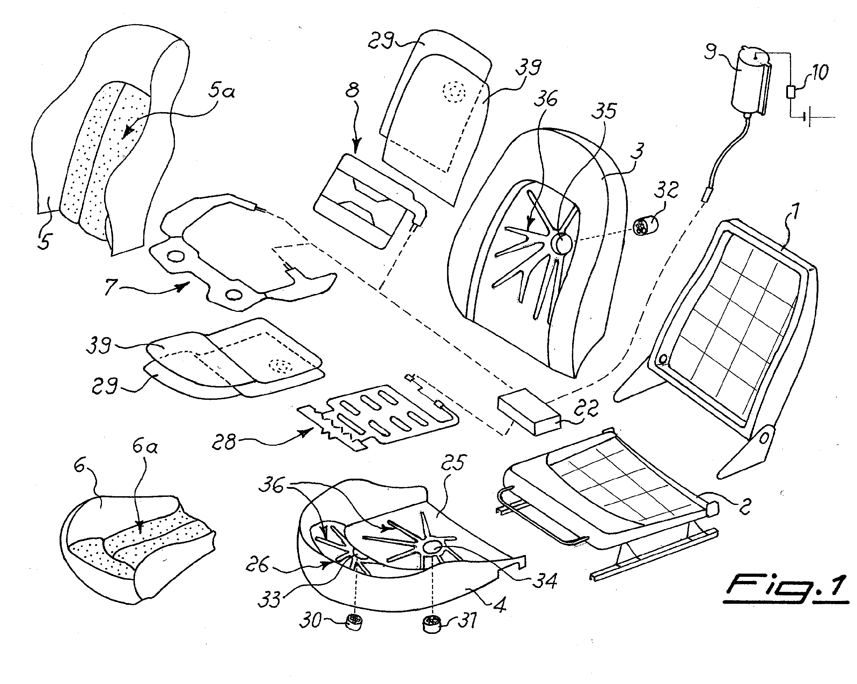

With reference to fig. 1, the seat according to the invention comprises one backrest of the seat and one seat part of the seat which will be referred to hereinafter as "backrest" and "seat". The seat comprises a backrest 1 and seat 2 metal supporting structure, corresponding portions of padding 3 and 4 and corresponding portions 5 and 6 of a cover which forms the exposed portion of the seat. In general further components are also present, but not discussed here, such as position adjustment devices, heaters, lateral air bags etc.

According to the invention a number of inflatable flexible elements or containers are also present which are generally divided into containers for the seat 7 and containers for the backrest 8; the volume occupied by said containers is increased by the introduction of a pressurised fluid, which consists preferably of air, passing from a flat condition to a convex condition, i.e. a condition in which they are inflated. In other words, the volume and therefore the height of the bags or containers is increased by introducing pressurised air into them. For said purpose a fluid source 9 is provided, preferably air, under pressure, generally consisting of an electric pump which, in a vehicle, is powered by the electrical system of said vehicle.

Voltage limiter devices 10 are also provided upstream of the pump 9 or of the control unit 22 to limit the voltage of the pump 9 or the control unit 22 and prevent it exceeding 12 Volts. It is also possible to use a limiter that limits the voltage to values below 12 Volts, for example 10 or 11 Volts. The value of 12 Volts is preferred as it represents the best compromise between performance and noise. In this way it is possible to keep the operating noise of the pump and control unit to very low levels. A suitable limiter device consists of three diodes in series; another suitable device is the one shown in fig. 8: in this figure the arrangement comprises four capacitors 13, a diode 14 and an integrated circuit 15 arranged between the input connector 1 1 and the output connectors 12. The capacitors are positioned two upstream and two downstream with respect to the integrated circuit 15 and the diode 14. The integrated circuit 15 is a voltage limiter integrated circuit like those produced by the firm ST. The integrated circuit 15 has the function of recognising the value of the input voltage: if the voltage exceeds 12 Volts, the integrated circuit restores it to said value whereas if the voltage is equal to or less than 12 Volts, the integrated circuit is not activated. The capacitors have the function of levelling the input and output voltage.

Between the padding and the massaging device, there is also, preferably, a pressure sensor 28 and at least one layer 29 of high permeability material, flexible and at the same time able to distribute the stress. Materials of this type are technically known, for example under the name "dry wave" or "3 mash" (produced by Müller Textil).

The pressure sensor 28 is itself technically known and operates as a passenger presence detector (PPD).

Fans 30, 31 and 32 are also present to supply ventilation air to corresponding holes 33, 34 and 35 and to the channels 36 connected to them and present on the cover side of the padding 3 and 4.

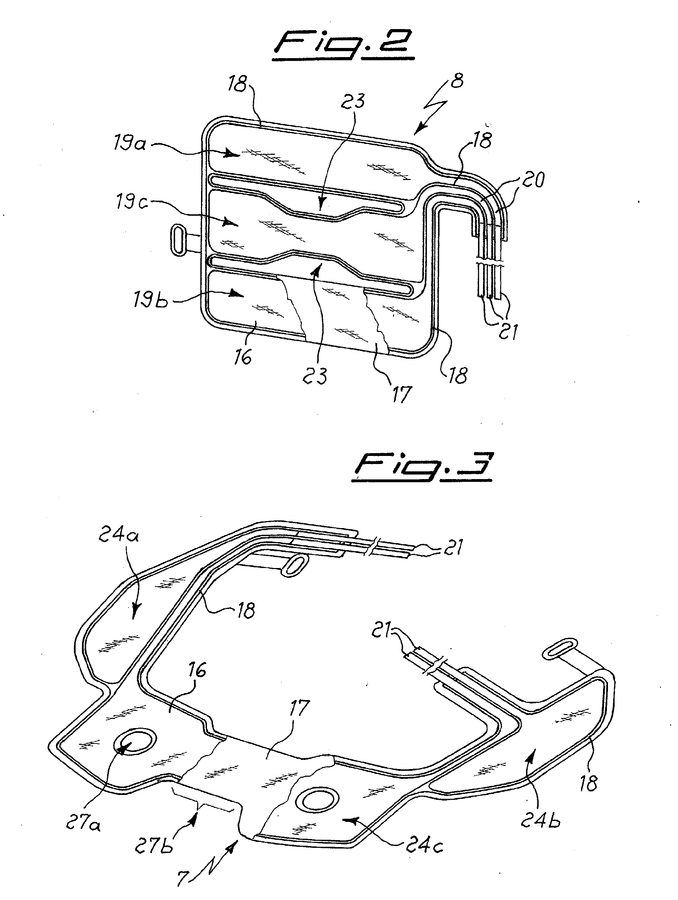

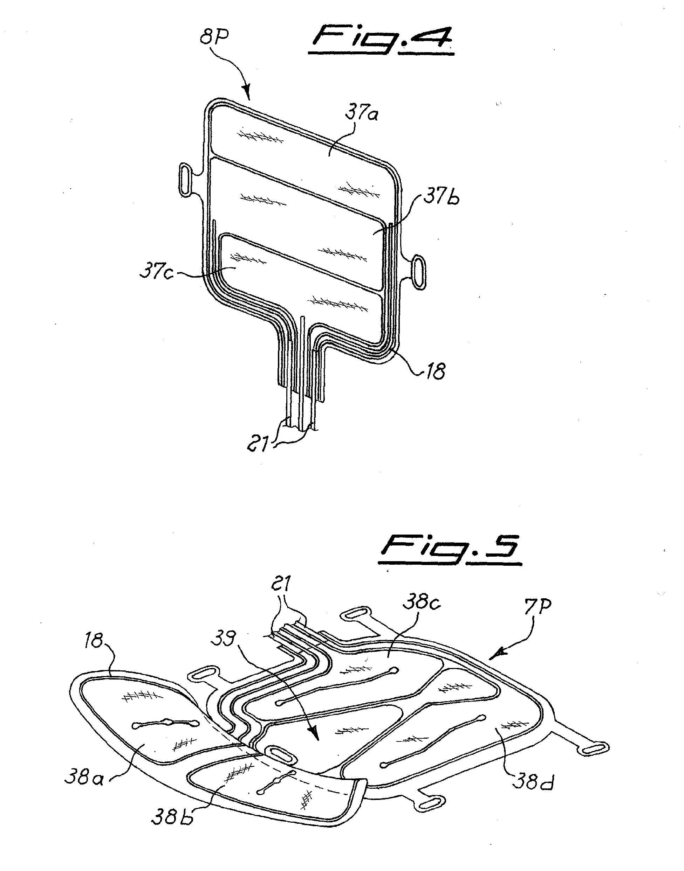

The containers 7 and 8 are shown in further detail in figures 2 and 3.

The containers consist of sheets of flexible plastic 16 and 17, coupled by means of sealing lines 18 which are shaped to define at least one seal bag between sheets 16 and 17. Each bag has an opening 20 in which ducts 21 are inserted for communication with a control unit 22 which in its turn communicates with the pump 9. Each bag can therefore be inflated and deflated by means of the air supplied to it by the pump 9 via the control unit 22. The connection between these elements is shown schematically in fig. 1 by broken lines.

In fig. 2 the sealing lines 18 define an upper bag 19a, a lower bag 19b and a central bag 19c. Between the bags there are two gaps 23 which permit passage of the incoming air through the padding 3, as will be explained in further detail below.

The seat container 7 features (fig. 3) two side bags 24a and 24b and a central bag 24c; the side bags are arranged to leave the central portion 25 of the seat padding 4 free and not to obstruct passage of the ventilation air. The central bag 24c is arranged to correspond to the front part 26 of the padding 4, where a fan is present, and features two holes 27a and two gaps 27b to permit passage of the ventilation air coming from the hole 33 and from the channels 36 of the padding.

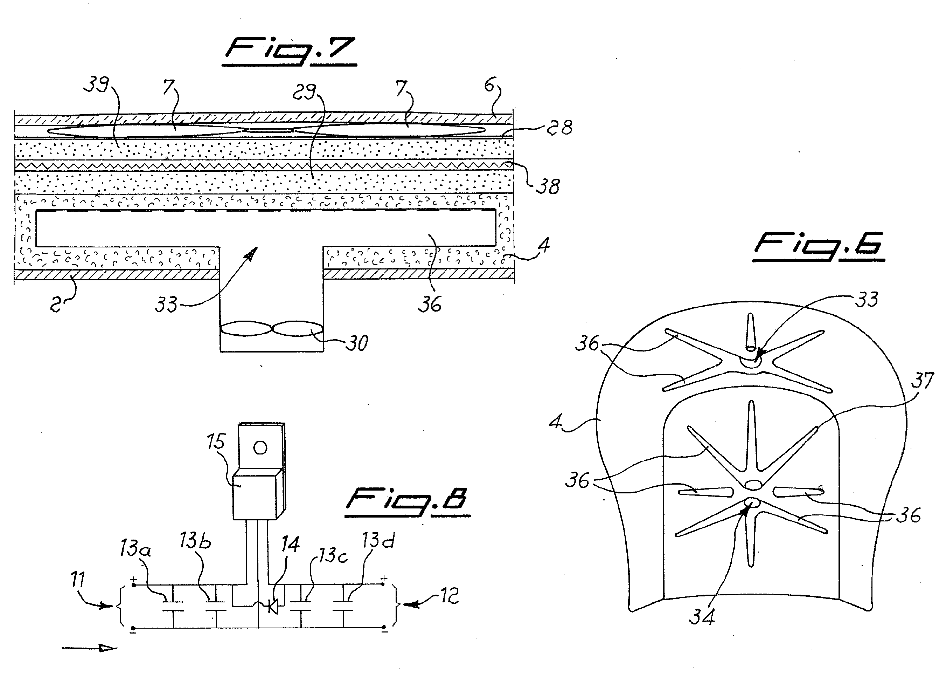

Figures 4 and 5 show the inflatable containers used for the rear seat, where the remaining elements of the massage device and conditioning/ventilation device, for example control unit, pump and pressure sensor, correspond to those used for the front seat. The padding with channels and fans, if present, also correspond substantially to those of the front seat.

More in particular, in the container 8P for the backrest of the rear seat, there are three bags or pockets 37a, 37b and 37c, defined by sealing lines 18 as described above; the central bag 37b functions as a lumbar support and the upper and lower bags provide the massage.

The container for seat 7P of the rear seat features four bags, two positioned at the front, 38a and 38b, and two positioned at the rear, 38c and 38d. In addition, one or more gaps or seat ventilation air passages are preferably present.

Fig. 6 shows a schematic plan view of a seat padding 4 which, as shown in fig. 1, features two holes 33 and 34 arranged respectively in the front and central area of the seat 4. The holes 33 and 34 are each provided with a series of channels 36 which radiate from the area of the holes towards the outside of the seat; said channels 36 are open at the top and tapered with section decreasing towards the outside ends 37. As can be seen in fig. 1 and in fig. 7, corresponding to the ventilation holes 33, 34 there are corresponding fans 30, 31 positioned below the seat, on the opposite side of the padding with respect to the cover 6, and beneath the suspension structure 2. In the case of the backrest, the fan 32 is fitted on the rear of the backrest.

Corresponding to at least part of the hole 33 the walls are shaped to prevent circular opening and thus prevent the possibility of one of the upper layers accidentally coming into contact with the fan following localised pressure on the seat. A double layer 29, 39 of structural and permeable material (for example the so-called "dry wave"), the passenger presence sensor 28, a heating element 38, the inflatable container 7 described above and the layer of covering 6 are arranged above the foamed padding 4. The layer of covering 6 is made preferably of a material which is at least partly permeable to flow of the air from the fan; in a preferential embodiment the cover 6 is leather and features areas 6a provided with a number of holes for said air flow. The corresponding references in fig. 1 for the backrest are indicated as 5 and 5a.

The control unit 22 is provided in a known way with a programmable microprocessor to implement the procedure of the invention as illustrated below. Control units of this type are known and sold on the market for the control of pneumatic devices to adapt the profile of the seat to the individual user, like the one described in the patent US-B-6273810 in the name of McCord Winn Textron Inc. These control units are also able to detect the pressure exerted locally by the user of the seat on an inflatable container and to set said container to a selected inflation pressure according to the pressure exerted by said user. A more detailed description of this type of control unit is given in US-A-6098000 in the name of McCord Winn Textron. According to the present invention, the control unit microprocessor is programmed to actuate the variation in volume occupied by the bags of the container 7, inflating and deflating them. This variation is preferably in succession and repeatable.

Operation of the device preferably brings a first container, for example bag 24c of fig. 3, to a pressure P1 able to inflate the bag, increasing the volume occupied, i.e. the height; restores said container to a non-pressurised condition, i.e. to a substantially flat condition corresponding to the initial volume occupied; pressurises at least one second container, for example the bags 24a and 24b or the bag 19b of fig. 2, increasing its height as mentioned above, after pressurising bag 24c; restores bag 24c to the atmospheric pressure and repeats said phases for all the present bags.

Preferably the first bag inflated, i.e. the first container, is deflated, restoring it to a flat condition, before supplying pressurised air to the second and subsequent bag or pair of bags and said inflation and deflation phases are repeated for all the bags in succession, in order to obtain an inflation and deflation direction of the bags from 24c to 19a (in fig. 2 and 3) and vice versa. Every time a bag is inflated, its height increases and stimulates the corresponding area of the passenger's or user's body; for said purpose the pressure and mechanical characteristics of the material of the bags are such as to permit said stimulation. In other words, the material of the bags must, once inflated and pressurised, be able to withstand the pressure exerted by the user. Materials of this type are technically known and are, for example, polyolefinic materials such as those used for the pneumatic devices with adaptation function that are sold on the market and mentioned in the patents McCord Winn Textron referred to above.

As mentioned above, the procedure provides preferably for detection, via the control unit 22, of the pressure exerted locally by the seat user on the containers, processing of the data relating to said pressure and regulation of the pressure (P1, P2) in the containers to a value greater than the pressure exerted by the user to obtain the massaging effect. In a preferential embodiment of one or more containers, or bags, they are kept at a constant pressure with the function of lumbar support and with adaptation function, i.e. in order to adapt the shape of the seat to the shape of its user. In the preferential embodiment shown for the front seat, the bags 24c, 19b and 19a are used for the massage, bags 24a and 24b are used for the adaptation function and bag 19c is used for the lumbar support of the passenger. In the rear seat all the bags are used for the massage except bag 37b which is used for the lumbar support. Preferably, the control unit features devices for selecting between use of the bags for massage and use of them with the adaptation function.

## Claims

1. Seat comprising a padding (3, 4), a cover (5, 6) and a massaging device, **characterised in that** said device comprises a number of flexible containers (7, 8), a source (9) of pressurised fluid, means (21) for connecting said containers to said source of pressurised fluid, means (22) for supplying separately said fluid to each of said containers and means (22) for removing separately said fluid from each of said containers, to increase and reduce the volume of said containers.

2. Seat according to claim 1, **characterised in that** said containers (7, 8) are arranged between said padding (3, 4) and said cover (5, 6).

3. Seat according to claim 1 or 2, **characterised in that** it is a seat for motor vehicles and comprises means for supplying the current from the system of said motor vehicle and means (10) for limiting the voltage of the incoming current from said system.

4. Seat according to one of the previous claims, **characterised in that** said containers consist of plastic sheets (16, 17) opposed and sealed to form bags (19a-c; 24a-c; 37a-c; 38a-d).

5. Seat according to one of the previous claims, **characterised in that** it comprises adjustable means (22) for controlling the repetition of said phases of increasing and reducing the volume occupied by said containers.

6. Seat according to one of the previous claims, **characterised in that** it comprises means (22) for detecting the pressure exerted by the seat user on the massage device and processing and control means (22) for adjusting the pressure in said containers (7, 8) according to said pressure exerted by the user.

7. Seat according to one of the previous claims, **characterised in that** it furthermore comprises a number of through holes (33-35) provided in said padding (3, 4), a number of fans (30-32) arranged corresponding to said through holes, and a number of air circulation channels (36) connected to said through holes and arranged on the opposite side to said fans.

8. Seat according to claim 7, **characterised in that** said channels (36) are tapered towards the distal end from said holes (33-35).

9. Seat according to claim 7 or 8, **characterised in that** it is provided with a fan (32) for said backrest and two fans (30-31) for said seat, one of said fans for the seat being arranged corresponding to the front portion (26) of said seat.

10. Massaging device for seats, **characterised in that** it comprises a number of inflatable containers (7, 8), a source of pressurised fluid (9), means (21, 22) for connecting said containers to said source of pressurised fluid, means (22) for supplying separately said fluid to each of said containers and means (22) for separately removing said fluid from said containers, to inflate and deflate said containers.

11. Device according to claim 10, **characterised in that** it furthermore comprises one or more of the characteristics of claims 2 to 6.

12. Procedure for performing a massage by means of a massaging device comprising a number of inflatable containers according to claims 10 or 11 in a seat according to one of the claims from 1 to 9, **characterised in that** it comprises the following phases:
increase the volume occupied by at least one first container (24c) by introduction of a pressurised fluid and stimulation of a first area of the seat user's body; restore said first container (24c) to a volume basically equal to the initial volume; increase the volume occupied by at least one second container (19b) by means of said pressurised fluid, after pressurising said first container (24c); restore said second container (19b) to a volume substantially equal to the initial volume; repeat said phases for said number of containers.

13. Procedure according to claim 12, **characterised in that** said first container (24c) is restored to said substantially initial volume prior to increasing the volume of said second container (19b).

14. Procedure according to claim 12 or 13, **characterised in that** the pressure exerted by the seat user on said containers is detected and the pressure in said containers is set to a value greater than said pressure exerted by the user.

15. Procedure according to one of the claims from 12 to 14, in which said source of pressurised fluid is a pneumatic pump (9) connected to the electrical system of a motor vehicle, **characterised in that** the incoming voltage to said pump (9) or control unit (22) is limited to a value equal to or below 12 Volts.

16. Procedure according to one of the claims from 12 to 15, **characterised in that** one or more containers (24a, 24b) are kept at a constant pressure with an adaptive function.
